# EUROPÄISCHE PATENTSCHRIFT

(11) **EP 3 388 171 B1**
(45) Veröffentlichungstag und Bekanntmachung des Hinweises auf die Patenterteilung: **07.06.2023**
(21) Anmeldenummer: 18164168.9
(22) Anmeldetag: 27.03.2018
(51) Int. Cl.: B22F 10/80, B33Y 50/00, B22F 3/24, B22F 3/105, B33Y 10/00, B33Y 30/00, B33Y 50/02, B23K 26/342, B29C 64/393, B29C 64/118, G05B 19/4097, G06F 30/00

(54) **VERFAHREN UND FERTIGUNGSVORRICHTUNG ZUM LAGENWEISEN AUFBAU EINES DURCH GEOMETRIEBESCHREIBUNGSDATEN DEFINIERTEN FORMKÖRPERS**
METHOD AND PRODUCTION DEVICE FOR PRODUCTION OF A SHAPED ARTICLE DEFINED BY GEOMETRIC DATA BUILT UP IN LAYERS
PROCÉDÉ ET DISPOSITIF DE FABRICATION PERMETTANT LA CONSTRUCTION EN COUCHES D'UN CORPS MOULÉ DÉFINI À L'AIDE DES DONNÉES DE DESCRIPTION GÉOMÉTRIQUE

(30) Priorität: 13.04.2017 DE 102017108031
(43) Veröffentlichungstag der Anmeldung: 17.10.2018
(73) Patentinhaber: GEFERTEC GmbH, 12681 Berlin (DE)
(72) Erfinder: Fischer, Georg, 13129 Berlin (DE); Röhrich, Tobias, 03185 Turnow-Preilack (DE); Haschke, Igor, 10437 Berlin (DE)
(74) Vertreter: Werner, André

(56) Entgegenhaltungen:
- EP-A1- 2 319 641
- EP-A1- 3 093 123
- DE-A1-102013 217 422
- US-A1- 2011 295 378
- US-A1- 2015 321 427

## Beschreibung

Die Erfindung betrifft ein Verfahren und eine Vorrichtung zur Fertigung eines Formkörpers mittels eines additiv-generativen Fertigungsverfahrens, bei welchem der lagenweise Aufbau durch Aufschmelzen und Abscheiden eines drahtförmigen Werkstoffes erfolgt.

Additiv-generative Fertigungsverfahren nehmen bereits heute eine bedeutende Stellung innerhalb der Fertigungstechnologien ein. Bekannte Vertreter der generativen Fertigungsverfahren sind z. B. das Schmelzschichtungsverfahren (FDM - Fused Deposition Modeling) für Kunststoffe, das selektive Laserschmelzen (SLM) oder das Auftragschweißen für Metalle, bei welchen der Werkstoff jeweils vor bzw. während des Abscheidens aufgeschmolzen wird.

Additiv-generative Fertigungsverfahren bieten gegenüber subtraktiven Verfahren den Vorteil der Werkstoffersparnis, jedoch den Nachteil einer geringeren Fertigungsgenauigkeit. Aus diesem Grund ist es bekannt, additiv gefertigte Formkörper einer spanenden Nachbearbeitung zu unterziehen. Beispielsweise beschreiben die DE 10 2014 014 202 A1 und die WO 2017/ 044892 A1 jeweils eine Vorrichtung zur Herstellung von Bauteilen, die sowohl additiv als auch subtraktiv fertigen kann.

DE 10 2013 217 422 A1 zeigt ein Koordinatenmessgerät mit integriertem 3D-Druckkopf und ein Verfahren zur Messung und mindestens teilweisen Erzeugung eines Werkstücks. Während des 3D-Drucks wird die geometrische Form des Formkörpers ständig mittels Tastkopf gemessen. Abweichungen zur Soll-Geometrie werden unmittelbar berücksichtigt durch Anpassen der Prozessparameter. EP 3093123 A1 offenbart ein Verfahren, insbesondere mittels Stereolithograpfie (SLA), zum Herstellen einer dreidimensionalen Gesamtstruktur die dadurch definiert wird, dass sequentiell eine Mehrzahl von sich insgesamt zu der Gesamtstruktur ergänzenden Teilstrukturen definiert werden, wobei die Teilstrukturen jeweils innerhalb von einhüllenden Grenzflächen begrenzt sind.

US 2015/321427 A1 offenbart Systeme und Verfahren, wobei einer Benutzerauswahl von Teilen aus einer Vielzahl virtueller Teile zum Erstellen eines virtuellen 3D-Modells in einer Modellierungsumgebung empfangen wird, sowie einer Benutzeranweisung zum Modifizieren oder Zusammenbauen von mindestens einem der Ausgewählten Teilen innerhalb der Modellierungsumgebung bekommen wird, wonach diese Benutzeranweisung gegen physische Beschränkungen eines zugehörigen 3D-Druckers validiert und des virtuellen 3D-Modells für den 3D-Druck auf dem zugeordneten 3D-Drucker nach dem Validieren ausgegeben wird. US 2011/295378 A1 bezieht sich auf verbesserte und/oder patientenangepasste (z. B. patientenspezifische und/oder vom Patienten konstruierte) orthopädische Implantate und Führungsinstrumente, welche schon gespeichert sind oder gespeichert werden in einer Datenbank. Diese Produkten werden mittels einem generativen Herstellungsverfahren, wie FDM, hergestellt.

Vor der additiv-generativen Fertigung ist ein CAD(Computer Aided Design, englischer Fachbegriff für rechnerunterstütztes Konstruieren)-Modell des herzustellenden Formkörpers anzufertigen. Die aus dem Stand der Technik bekannten additiv-generativen Fertigungsanlagen (auch 3D-Drucker genannt) können jedoch diese CAD-Modelle nicht direkt in ein Produkt umsetzen. Hierfür ist eine Aufarbeitung des CAD-Modells hinsichtlich einer Zerlegung in einzelne Lagen (d. h. Scheiben) notwendig, das sog. "Slicen" (englischer Fachbegriff für "in Scheiben schneiden"). Einen faktischen Industriestandard für von 3D-Druckern verarbeitbare Modelle stellt das STL-Format (STL - Standard Tesselation Language) dar.

Zwar kann das Aufbereiten der CAD-Daten für den 3D-Drucker, d. h. das "Slicen", per Software erfolgen, doch ist in der Regel ein großer, manueller Nachbearbeitungsaufwand erforderlich. Somit ist dieser Verfahrensschritt in der additiven Fertigung ein wesentlicher Zeit- und Kostenfaktor.

Aufgabe der Erfindung ist es, ein Verfahren und eine Vorrichtung zur additiv-generativen Fertigung zur Verfügung zu stellen, die unter Verzicht auf den Verfahrensschritt des "Slicens" einen Formkörper direkt aus einem vorgegebenen CAD-Modell herstellen können, wobei eine hohe Fertigungsgeschwindigkeit bei gleichzeitig hoher Maßhaltigkeit und geringen Fertigungskosten ermöglicht sein soll, sodass ein Formkörper mit im Vergleich zum Stand der Technik verkürztem Zeitaufwand maßgenau hergestellt werden kann.

Die Lösung dieser Aufgabe erfolgt durch ein Verfahren zum lagenweisen Aufbau mit den Merkmalen nach Patentanspruch 1 sowie eine Fertigungsvorrichtung mit den kennzeichnenden Merkmalen nach Patentanspruch 11. Zweckmäßige Weiterbildungen der Erfindung sind Gegenstand der Unteransprüche.

Erfindungsgemäß wird ein Fertigungsverfahren zur lagenweisen Herstellung eines Formkörpers aus einem schmelzbarem Werkstoff, nämlich einem drahtförmigen, an der Drahtspitze unter Energiezufuhr abzuschmelzenden Werkstoff, bereitgestellt, wobei eine additive, ggf. kombiniert mit einer subtraktiven, Fertigung des durch Geometriebeschreibungsdaten, d. h. ein CAD-Modell, vorgegebenen Formkörpers unter Rückgriff auf in einer Datenbank gespeicherter Prozessparameter erfolgt. Diese Datenbank wird kontinuierlich während jeder Fertigung eines Formkörpers ergänzt, sodass ihr Umfang mit zunehmender Anzahl gefertigter Formkörper zunimmt.

Die zur Durchführung dieses Verfahrens bereitgestellte Fertigungsvorrichtung umfasst neben der Datenbank eine Steuerungseinheit, in welcher selbige Datenbank gespeichert ist, sowie mindestens einen bewegbaren Bearbeitungskopf an welchem eine Werkstoffzuführeinrichtung befestigt ist oder (zeitweise) befestigt werden kann. Die Werkstoffzuführeinrichtung führt den drahtförmigen, Werkstoff der Position, an welcher er abgeschmolzen bzw. abgeschieden wird, zu. Die Steuerungseinheit ist mit der Werkstoffzuführeinrichtung und einer Energiequelle verbunden. Mittels dieser Energiequelle, die ein Lichtbogen, ein Laser oder eine elektrische Widerstandsheizung sein kann, erfolgt die Energiezufuhr zum Schmelzen des Werkstoffes.

In der Fertigungsvorrichtung inbegriffen ist ferner eine Druckplattform, auf welcher der Formkörper aufgebaut wird, wobei vorgesehen sein kann, dass die Druckplattform nach Fertigstellung jeweils einer Lage um die Höhe dieser Lage in vertikaler Richtung nach unten bewegt wird. Es kann auch vorgesehen sein, dass die Werkstoffzuführeinrichtung der Fertigungsvorrichtung entsprechend des lagenweisen Wachsens des Formkörpers in der Höhe nachgeführt wird, während die Druckplattform unbewegt ist.

Weiterhin kann die Fertigungsvorrichtung auch noch ein oder mehrere Zerspanungswerkzeuge umfassen, welche in wenigstens einer Achse, vorzugsweise in fünf Achsen, bewegbar sind. Das Zerspanungswerkzeug kann als Austauschwerkzeug zur Befestigung an dem Bearbeitungskopf vorgesehen sein oder an einem eigenen, d. h. zweiten, Bearbeitungskopf der Fertigungsvorrichtung befestigt sein.

Zusätzlich ist in der Fertigungsvorrichtung ein optisch arbeitendes Messsystem zur quantitativen, dreidimensionalen Erfassung der Geometrie, d. h. der geometrischen Abmessungen von bereits aufgebauten Teilen des Formkörpers bzw. des fertiggestellten Formkörpers vorgesehen.

Das Fertigungsverfahren gemäß der Erfindung, insbesondere unter Verwendung der oben genannten Fertigungsvorrichtung, wird folgendermaßen durchgeführt:
Das die Geometriebeschreibungsdaten enthaltende CAD-Modell des herzustellenden Formkörpers wird direkt, d. h. unter Verzicht auf ein "Slicen", über eine entsprechende Schnittstelle in die Steuerungseinheit der Fertigungsvorrichtung eingegeben. Zusätzlich werden, falls noch nicht in der CAD-Datei verankert, weitere Eingabeparameter in die Steuerungseinheit eingegeben. Diese weiteren Eingabeparameter können Werkstoffbeschreibungsdaten, wie der oder die Werkstoffe des herzustellenden Formkörpers sowie ggf. lokal und/oder global zu realisierende Eigenschaften, z. B. Härte oder Dichte, umfassen. Mithin können die Werkstoffbeschreibungsdaten auch lokal im Formkörper variierende Werkstoffzusammensetzungen und/oder lokal variierende physikalische Eigenschaften, die z. B. durch die Mikrostruktur definiert sind, des Formkörpers beschreiben.

Die Steuerungseinheit ist ausgebildet, Soll-Prozessparameter zur Abscheidung des oder der Werkstoffe in einzelnen Werkstoffbahnen anhand der CAD-Daten, die zumindest die Geometriebeschreibungsdaten umfassen, sowie anhand der weiteren Eingabeparameter, die z. B. die Werkstoffbeschreibungsdaten umfassen, zu generieren.

Unter dem Begriff Werkstoffbahn wird eine räumlich begrenzte, typischerweise streifenförmige Ablagerung des Werkstoffes verstanden. Der Bearbeitungskopf wird hierbei zur Erzeugung einer Werkstoffbahn entlang einer Linie oder Kurve geführt, wobei der schmelzflüssige Werkstoff abgeschieden wird. Somit wird eine z. B. großflächige Scheibe aus mehreren, benachbart abgeschiedenen Werkstoffbahnen oder einer einzelnen, schlangenförmig abgelegten Werkstoffbahn gebildet. Beispielsweise ist die beim Lichtbogenauftragschweißen gebildete Schweißraupe eine derartige Werkstoffbahn.

Gemäß des Verfahrens wird der herzustellende Formkörper in einzelne Teilstrukturen zerlegt, d. h., der Formkörper kann als aus mehreren Teilstrukturen zusammengesetzt betrachtet werden. Diese Teilstrukturen werden eine geometrische Form aufweisen, die nicht der bei der additiven Fertigung üblichen scheibenartigen Querschnittsgeometrie des Formkörpers entspricht. Somit sind die Teilstrukturen einzelne, virtuell abgegrenzte Bereiche des Formkörpers, die jede beliebige geometrische Form aufweisen können.

Anzahl und jeweilige Form der Teilstrukturen wird anhand der in der Datenbank vorliegenden Einträge von gespeicherten Prozessparametern bestimmt, wobei sich diese Einträge jeweils auf eine (bereits bekannte bzw. erlernte) Teilstruktur beziehen. Dieser Datenbankeintrag erfolgt beispielsweise in einer Datenbanktabelle, die den Vorgabe-CAD-Daten bzw. der vorgegebenen zu realisierenden geometrischen Form dieser Teilstruktur des Formkörpers bezeichnet.

Im Idealfall kann somit bei einem neu anzufertigenden Formkörper auf die Datenbanktabellen zurückgegriffen werden, wenn dort bereits Teilstrukturen mit den entsprechenden Prozessparametern zu deren Herstellung hinterlegt sind, aus denen der nunmehr neu herzustellende Formkörper zusammensetzbar ist. Insbesondere ist die Steuerungseinheit der Fertigungsvorrichtung eingerichtet, den herzustellenden Formkörper hinsichtlich bereits bekannter, d. h. in der Datenbank präsenter, Teilstrukturen zu analysieren. Auch wenn nur einzelne Teilbereiche bzw. Teilstrukturen eines neu herzustellenden Formkörpers in der Datenbank hinterlegt sind, können diese Teilbereiche bzw. Teilstrukturen unter Rückgriff auf die bereits bekannten Prozessparameter gefertigt werden, während die restlichen Teilbereiche von Grund auf neu "gelernt" werden, indem die Werkstoffbahnen, wie im Folgenden beschrieben, iterativ gedruckt und gemessen - und ggf. abgetragen - werden und die jeweils verwendeten Prozessparameter iterativ in Datenbanktabellen der Datenbank gespeichert werden, bis die optimalen Soll-Prozessparameter feststehen.

Zur iterativen Verbesserung der Soll-Prozessparameter, zur Fertigung (und zum Erlernen) bislang noch unbekannter Teilstrukturen, wird nach dem Abscheiden einer Werkstoffbahn mittels des optischen Messsystems ihre geometrische Form quantitativ bestimmt. Diese gemessene Ist-Geometrie wird, z. B. von der Steuerungseinheit, mit der durch die Geometriebeschreibungsdaten der CAD-Datei für diesen Bereich des Formkörpers vorgegebenen Soll-Geometrie, d. h. geometrische Soll-Form, verglichen.

Die Differenz zwischen Soll- und Ist-Geometrie, d. h. die Abweichung der abgeschiedenen Werkstoffbahn von der Vorgabe durch die Geometriebeschreibungsdaten, wird zusammen mit den zum Abscheiden dieser Werkstoffbahn verwendeten Prozessparameter in der Datenbank hinterlegt.

Bei einer Abweichung von Soll- und Ist-Geometrie kann eine Nachbearbeitung z. B. mittels spanender Verfahren der (gerade abgeschiedenen) Werkstoffbahn erfolgen, sodass mittels subtraktiver Fertigung die Ist-Geometrie der Werkstoffbahn in die durch die Geometriebeschreibungsdaten vorgegebene Soll-Geometrie gebracht wird.

Nun erfolgt das Abscheiden der nächsten Werkstoffbahn, wobei die zur Abscheidung verwendeten Soll-Prozessparameter anhand der in die Datenbank eingetragenen Daten, d. h. dem Zusammenhang zwischen Prozessparametern und den, insbesondere geometrischen, Eigenschaften der unter Verwendung derselben abgeschiedenen Werkstoffbahn, angepasst werden, sodass die voraussichtliche Abweichung der Geometrie der nunmehr zu erstellenden Werkstoffbahn von der anzustrebenden geometrischen Form verkleinert wird.

Mit jeder abgeschiedenen Teilstruktur bzw. Werkstoffbahn einer Teilstruktur des herzustellenden Formkörpers wird somit die Datenbank bzw. die Datenbanktabelle zu der Teilstruktur erweitert, falls Differenzen zwischen Ist- und Soll-Geometrie der abgeschiedenen Werkstoffbahn auftreten. Auf diese Art entsteht in der Datenbank eine Sammlung von Datenbanktabellen mit jeweils einer Teilstruktur, insbesondere ihrer geometrischen Form und Abmessungen, sowie den zur Herstellung der Teilstruktur verwendeten Prozessparametern.

Die Soll-Prozessparameter können eine Vorschubgeschwindigkeit, eine Werkstofftemperatur und/oder eine Werkstoff-Zuführrate umfassen.

Der Vorteil des erfindungsgemäßen Verfahrens ist das "selbständige Lernen" der Fertigungsvorrichtung. Einzig anhand des CAD-Modells sowie weiterer Eingabeparameter kann die Steuereinheit der Fertigungsvorrichtung Prozessparameter festlegen, wobei ihr "Gedächtnis" in Form der Datenbank die für bereits bekannte Teilstrukturen erlernten Prozessparameter vorgeben kann. Somit kann der bisher in der additiven Fertigung notwendige Schritt des zeitaufwendigen "Slicens" komplett entfallen.

Ein weiterer Vorteil ist, dass die streng sequentielle Aufbauweise, nämlich Lage für Lage, nicht mehr zwingend einzuhalten ist. Stattdessen kann der Formkörper unter Rückgriff auf die Datenbank aus einzelnen Teilstrukturen, d. h. Teilstruktur für Teilstruktur, gefertigt werden.

Somit ist eine Zerlegung des Formkörpers in einzelne Teilstrukturen möglich, wobei die Zerlegung in Teilstrukturen derart erfolgt, dass eine Vielzahl dieser Teilstrukturen bereits einen Tabelleneintrag in der Datenbank besitzt. Es werden dann nur diejenigen Bereiche des Formkörpers mittels der oben beschriebenen Iterationen neu erlernt, die nicht durch die aus der Datenbank bekannten Teilstrukturen abbildbar sind.

Hierbei kann vorgesehen sein, dass zwei Teilstrukturen des Formkörpers, die unabhängig voneinander herstellbar sind, parallel gefertigt werden, wobei z. B. ein Bearbeitungskopf der Fertigungsvorrichtung zwischen einer ersten Bearbeitungsposition an der ersten Teilstruktur und einer zweiten Bearbeitungsposition an der zweiten Teilstruktur hin und her springt oder zwei Bearbeitungsköpfe voneinander unabhängig, aber dennoch zeitgleich, an zwei räumlich getrennten Bearbeitungspositionen jeweils eine Teilstruktur aufbauen.

Gemäß einer Ausgestaltung der Erfindung kann vorgesehen sein, ein Abtragen, z. B. mittels Zerspanens, derjenigen additiv gefertigten Bereiche, die außerhalb der von den Geometriebeschreibungsdaten vorgegebenen Soll-Geometrie des Formkörpers liegen, nach Komplettierung einer aus mehreren Werkstoffbahnen gebildeten Lage des lagenweise aufzubauenden Formkörpers und/oder nach Abschluss der gesamten additiven Fertigung durchzuführen, wobei dieses Abtragen zusätzlich oder alternativ zu der Nachbearbeitung der einzelnen Werkstoffbahnen erfolgen kann.

Weiterhin kann vorgesehen sein, dass der schmelzbare Werkstoff nach seinem Abscheiden in der Werkstoffbahn zur schnelleren Verfestigung mittels eines Kühlmittels gekühlt wird. Ebenso können zur effizienteren Wärmeabfuhr die bereits fertiggestellten Bereiche des Formkörpers mittels des Kühlmittels gekühlt werden. Hierbei kann vorgesehen sein, die bereits aufgebauten Teile des Formkörpers zumindest temporär vollständig von dem Kühlmittel einzuschließen, d. h., während einer Unterbrechung des Abscheideprozesses ist der bereits aufgebaute Teil des Formkörpers komplett von dem Kühlmittel umgeben.

Als Kühlmittel können ein Prozessgas oder Kohlendioxidschnee verwendet werden.

Das optische Messsystem kann einen oder mehrere, ggf. bewegbar angeordnete Laserstrahlemitter sowie einen oder mehrere, ggf. ebenfalls bewegbar angeordnete Laserstrahldetektoren umfassen.

Alternativ kann das optische Messsystem wenigstens eine bewegbar angeordnete Kamera und eine mit dieser verbundene Auswerteeinheit aufweisen, wobei z. B. mittels auf Strukturen des Formkörpers zu befestigender Markierungen und Bildaufnahmen der (markierten) Strukturen von der Auswerteeinheit eine dreidimensionale Geometrie mit exakten Abmessungen berechenbar ist.

## Patentansprüche

1. Verfahren zum lagenweisen Aufbau eines durch Geometriebeschreibungsdaten definierten Formkörpers unter Verzicht auf einen Slicen beinhaltenden Verfahrensschritt mittels Aufschmelzens und Abscheidens von schmelzbarem drahtförmigen Werkstoff in einzelnen Werkstoffbahnen, wobei jede der aufzubauenden Lagen durch Abscheiden des schmelzflüssigen Werkstoffs in eine oder mehrere nebeneinander abgeschiedene Werkstoffbahnen gebildet wird, unter Verwendung einer Datenbank, in welcher Soll-Prozessparameter für das Abscheiden der Werkstoffbahnen gespeichert sind,
aufweisend die folgenden Verfahrensschritte:
(a) Zerlegen des herzustellenden Formkörpers in einzelne, als virtuell abgegrenzte Bereiche des Formkörpers ausgebildete Teilstrukturen, wobei die Zerlegung des herzustellenden Formkörpers in Teilstrukturen derart erfolgt, dass eine Vielzahl dieser Teilstrukturen bereits aufgrund eines Soll-Prozessparameter-Eintrags in der Datenbank bekannt ist;
(b) sukzessives Aufbauen des Formkörpers aus den Teilstrukturen, wobei in der Datenbank unbekannte Teilstrukturen erzeugt werden, indem für eine dieser unbekannten Teilstrukturen;
(c) Soll-Prozessparameter mittels einer Steuerungseinheit anhand der Geometriebeschreibungsdaten für die unbekannte Teilstruktur sowie weiterer Eingabeparameter generiert werden;
(d) eine Werkstoffbahn der unbekannten Teilstruktur unter Verwendung der Soll-Prozessparameter abgeschieden wird;
(e) eine geometrische Ausdehnung der abgeschiedenen Werkstoffbahn gemessen und die gemessene geometrische Ausdehnung mit den Geometriebeschreibungsdaten zum Zwecke der Feststellung, welche Bereiche der Werkstoffbahn innerhalb des durch die Geometriebeschreibungsdaten definierten Formkörpers liegen, verglichen wird;
(f) anhand der geometrischen Abweichungen der abgeschiedenen Werkstoffbahn von den Geometriebeschreibungsdaten und der zum Abscheiden der Werkstoffbahn verwendeten Ist-Prozessparameter in der Datenbank Soll-Prozessparameter für die gerade gefertigte unbekannte Teilstruktur gespeichert werden, wobei die Soll-Prozessparameter derart angepasst werden, dass die geometrische Abweichung der abzuscheidenden Werkstoffbahn von den Geometriebeschreibungsdaten verkleinert wird;
(g) Wiederholen der Schritte (d) bis (f) zum Aufbau und Erlernen der unbekannten Teilstruktur.

2. Verfahren nach Anspruch 1, **dadurch gekennzeichnet, dass** jeweils nach dem Abscheiden einer Werkstoffbahn diejenigen Bereiche der Werkstoffbahn, die außerhalb des durch die Geometriebeschreibungsdaten definierten Volumens des Formkörpers liegen, abgetragen werden und/oder nach Abschluss einer Lage und/oder des gesamten Formkörpers eine spanende Bearbeitung erfolgt.

3. Verfahren nach einem der vorstehenden Ansprüche, **dadurch gekennzeichnet, dass** die Festlegung der Soll-Prozessparameter zusätzlich auf Basis einer Differenz zwischen den durch die Geometriebeschreibungsdaten definierten, für den Aufbau des Formkörpers noch zu füllenden Raumbereichs und der Geometrie des bereits aufgebauten Teils des Formkörpers durchgeführt wird.

4. Verfahren nach einem der vorstehenden Ansprüche, **dadurch gekennzeichnet, dass** der Aufbau der einzelnen Lagen diskontinuierlich durchgeführt wird, indem an mindestens zwei Positionen des Formkörpers eine oder mehrere Lagen wechselweise abgeschieden werden.

5. Verfahren nach einem der vorstehenden Ansprüche, **dadurch gekennzeichnet, dass** die Soll-Prozessparameter auch unter Berücksichtigung einer von Werkstoffbeschreibungsdaten für jede Werkstoffbahn vorgegebenen Zusammensetzung und/oder Mikrostruktur des Formkörpers gewählt werden.

6. Verfahren nach einem der vorstehenden Ansprüche, **dadurch gekennzeichnet, dass** die einzustellenden Soll-Prozessparameter eine Vorschubgeschwindigkeit, eine Werkstofftemperatur und/oder eine Werkstoff-Zuführrate umfassen.

7. Verfahren nach einem der vorstehenden Ansprüche, **dadurch gekennzeichnet, dass** der schmelzbare Werkstoff nach seinem Abscheiden in der Werkstoffbahn und/oder die bereits fertiggestellten Teile des Formkörpers mittels eines Kühlmittels gekühlt werden.

8. Verfahren nach Anspruch 7, **dadurch gekennzeichnet, dass** ein Prozessgas oder Kohlendioxidschnee als Kühlmittel verwendet wird.

9. Verfahren nach einem der Ansprüche 7 bis 8, **dadurch gekennzeichnet, dass** die bereits aufgebauten Teile des Formkörpers vollständig von dem Kühlmittel eingeschlossen werden.

10. Verfahren nach einem der vorstehenden Ansprüche, **dadurch gekennzeichnet, dass** das Aufschmelzen des Werkstoffes mittels Lichtbogens, Lasers oder Widerstandserwärmung erfolgt.

11. Fertigungsvorrichtung, eingerichtet zur Durchführung des Verfahrens nach einem der vorstehenden Ansprüche, umfassend
- eine Druckplattform und die Steuerungseinheit,
- mindestens eine Werkstoffzuführeinrichtung und eine Energiequelle, die derart gestaltet ist, dass von der Werkstoffzuführeinrichtung zugeführte Werkstoffe punktuell aufschmelzbar sind,
wobei
- sie eine in die Steuerungseinheit integrierte Datenbank,
- eine Schnittstelle zum Empfang von Geometriebeschreibungsdaten, sowie
- ein optisches Messsystem zur dreidimensionalen Messung der Oberfläche von bereits aufgebauten Teilen des Formkörpers aufweist,
- wobei die Steuerungseinheit eingerichtet ist, den Formkörper auf Basis der Geometriebeschreibungsdaten in bekannte Teilstrukturen mit jeweils einem Soll-Prozessparameter-Eintrag in der Datenbank und in unbekannte Teilstrukturen ohne einen Soll-Prozessparameter-Eintrag in der Datenbank zu zerlegen, Soll-Prozessparameter auszuwählen, diese ausgewählten Soll-Prozessparameter auf Basis der in der Datenbank gespeicherten Daten derart anzupassen, dass für jede der unbekannten Teilstrukturen die geometrische Abweichung der Form jeder abzuscheidenden Werkstoffbahn von den Geometriebeschreibungsdaten des Formkörpers minimiert wird und diese angepassten Soll-Prozessparameter zu der unbekannten Teilstruktur in der Datenbank zu speichern.

12. Fertigungsvorrichtung nach Anspruch 11, **dadurch gekennzeichnet, dass** sie ferner mindestens ein in wenigstens einer Achse bewegbares Zerspanungswerkzeug umfasst.

## Claims

1. Method for the layered construction of a shaped body defined by geometry description data, dispensing with a process step containing slicing by melting and depositing fusible wire-like material in individual material webs, each of the layers to be built-up being formed by depositing the molten material into one or more material webs deposited next to one another is, using a database in which target process parameters for the deposition of the material webs are stored,
comprising the following method steps:
(a) dividing the shaped article to be manufactured into individual substructures, the dividing into substructures taking place in such a way that a multiplicity of these substructures is already known on the basis of a target process parameter entry in the database;
(b) successive build-up of the shaped article from the substructures, wherein unknown substructures are generated in the database, in that
(c) target process parameters are generated by means of a control unit using the geometry description data for the unknown substructure and other input parameters;
(d) a material web of the unknown substructure is deposited using target process parameters;
(e) a geometric extension of the deposited material web is measured and the measured geometric extension is compared with the geometry description data for the purpose of determining which areas of the material web lie within the shaped article defined by the geometry description data;
(f) on the basis of the geometric deviations of the deposited material from the geometry description data and the actual process parameters used for depositing the material web, target process parameters for the substructure just produced are stored in the database, with the target process parameters being adapted in this way be that the geometric deviation of the material web to be deposited is reduced from the geometry description data;
(g) repeating steps (d) through (f) to built-up and learn the unknown substructure.

2. Method according to claim 1, **characterized in that** after a material web (3) has been deposited, those areas of the material web which lie outside the by geometry description data of the shaped article are removed and/or after completion of a layer and/or after completion of the entire shaped article a machining step is performed.

3. Method according to one of the preceding claims, **characterized in that** the determination of the target process parameters is additionally based on a difference between the spatial region of the shaped article defined by the geometry description data still to be filled for building-up the shaped article and the geometry of the part of the shaped article that has already been built up.

4. Method according to one of the preceding claims, **characterized in that** the individual layers are built up discontinuously by alternately depositing one or more layers at at least two positions of the shaped article.

5. Method according to one of the preceding claims, **characterized in that** the target process parameters are also selected considering a composition and/or microstructure of the shaped article specified by material description data for each material web.

6. Method according to one of the preceding claims, **characterized in that** the target process parameters to be set include a feed rate, a material temperature and/or a material feed rate.

7. Method according to one of the preceding claims, **characterized in that** the fusible material after it has been deposited in the material web and/or the already finished parts of the shaped body are cooled by means of a coolant.

8. Method according to claim 7, **characterized in that** a process gas or carbon dioxide snow is used as the coolant.

9. Method according to one of claims 7 to 8, **characterized in that** the parts of the shaped article which have already been built up are completely enclosed by the coolant.

10. Method according to one of the preceding claims, **characterized in that** the melting of the material takes place by means of an arc, laser or resistance heating.

11. Manufacturing device, set up for carrying out the method according to any one of the preceding claims, comprising
- a printing platform and the control unit,
- at least one material feed device and one energy source, which is designed in such a way that materials fed in from the material feed device can be melted at certain points,
wherein
- it comprises a database integrated into the control unit,
- an interface for receiving geometry description data, and
- an optical measuring system for three-dimensional measurement of the surface of already built-up parts of the shaped article,
- wherein the control unit is designed to decompose the shaped article on the basis of the geometry description data into known substructures with in each case a target process parameter entry in the database and into unknown substructures without a target process parameter entry in the database, to select target process parameters, to adapt these selected target process parameters on the basis of the data stored in the database in such a way that for each of the substructures the geometric deviation of the shape of each material web to be deposited from the geometry description data of the shaped article is minimized and to store these adapted target process parameters with respect to the substructure in the database.

12. Manufacturing device according to claim 11, **characterized in that** it further comprises at least one cutting tool movable in at least one axis.

## Revendications

1. Procédé permettant la construction en couches d'un corps moulé défini à l'aide des données de description géométrique, en renonçant à une étape de procédé comprenant un tranchage, au moyen d'une fusion et d'un dépôt d'un matériau filiforme fusible dans des bandes de matériau individuelles, chacune des couches à construire étant formée par dépôt du matériau en fusion dans une ou plusieurs bandes de matériau déposées les unes à côté des autres, en utilisant une base de données dans laquelle sont mémorisés des paramètres de procédé de consigne pour le dépôt des bandes de matériau,
comprenant les étapes de procédé suivantes :
(a) décomposition du corps moulé à fabriquer en structures partielles individuelles réalisées sous forme de zones virtuellement délimitées du corps moulé, la décomposition du corps moulé à fabriquer en structures partielles s'effectuant de telle sorte qu'une pluralité de ces structures partielles est déjà connue sur la base d'une entrée de paramètres de processus de consigne dans la base de données ;
(b) construction successive du corps moulé à partir des structures partielles, en générant dans la base de données des structures partielles inconnues pour une de ces structures partielles inconnues ;
(c) des paramètres de processus de consigne sont générés au moyen d'une unité de commande à l'aide des données de description géométrique pour la structure partielle inconnue ainsi que d'autres paramètres d'entrée ;
(d) une bande de matériau de la structure partielle inconnue est déposée en utilisant les paramètres de processus de consigne ;
(e) une extension géométrique de la bande de matériau déposée est mesurée et l'extension géométrique mesurée est comparée avec les données de description géométrique dans le but de déterminer quelles zones de la bande de matériau se trouvent à l'intérieur du corps moulé défini par les données de description géométrique ;
(f) à l'aide des écarts géométriques de la bande de matériau déposée par rapport aux données de description géométrique et des paramètres de processus réels utilisés pour le dépôt de la bande de matériau, des paramètres de processus de consigne pour la structure partielle inconnue qui vient d'être fabriquée sont mémorisés dans la base de données, les paramètres de processus de consigne étant adaptés de manière à réduire l'écart géométrique de la bande de matériau à déposer par rapport aux données de description géométrique ;
(g) répétition des étapes (d) à (f) pour construire et apprendre la structure partielle inconnue.

2. Procédé selon la revendication 1, **caractérisé en ce que**, à chaque fois après le dépôt d'une bande de matériau, les zones de la bande de matériau qui se trouvent en dehors du volume du corps moulé défini par les données de description géométrique sont enlevées et/ou un usinage par enlèvement de copeaux est effectué après l'achèvement d'une couche et/ou de l'ensemble du corps moulé.

3. Procédé selon l'une quelconque des revendications précédentes, **caractérisé en ce que** des paramètres de processus de consigne sont déterminés en outre sur la base d'une différence entre la zone d'espace à remplir encore pour la construction du corps moulé, définie par les données de description géométrique, et la géométrie de la partie déjà construite du corps moulé.

4. Procédé selon l'une quelconque des revendications précédentes, **caractérisé en ce que** les différentes couches sont constituées de manière discontinue, en déposant alternativement une ou plusieurs couches en au moins deux positions du corps moulé.

5. Procédé selon l'une quelconque des revendications précédentes, **caractérisé en ce que** les paramètres de procédé de consigne sont également choisis en tenant compte d'une composition et/ou d'une microstructure du corps moulé prédéfinie par des données de description de matériau pour chaque bande de matériau.

6. Procédé selon l'une quelconque des revendications précédentes, **caractérisé en ce que** les paramètres de processus de consigne à régler comprennent une vitesse d'avance, une température de matériau et/ou un taux d'alimentation en matériau.

7. Procédé selon l'une quelconque des revendications précédentes, **caractérisé en ce que** le matériau fusible, après son dépôt dans la bande de matériau et/ou les parties déjà finies du corps moulé sont refroidis au moyen d'un agent de refroidissement.

8. Procédé selon la revendication 7, **caractérisé en ce qu'**un gaz de traitement ou de la neige carbonique est utilisé comme agent de refroidissement.

9. Procédé selon l'une quelconque des revendications 7 à 8, **caractérisé en ce que** les parties déjà construites de l'objet moulé sont complètement enfermées par le fluide de refroidissement.

10. Procédé selon l'une quelconque des revendications précédentes, **caractérisé en ce que** la fusion du matériau est réalisée au moyen d'un arc électrique, d'un laser ou d'un chauffage par résistance.

11. Dispositif de fabrication, conçu pour mettre en oeuvre le procédé selon l'une quelconque des revendications précédentes, comprenant
- une plateforme d'impression et l'unité de commande,
- au moins un dispositif d'alimentation en matériau et une source d'énergie qui est conçue de telle sorte que des matériaux amenés par le dispositif d'alimentation en matériau peuvent être fondus ponctuellement,
- le dispositif présentant une base de données intégrée dans l'unité de commande,
- une interface pour la réception de données de description géométrique, ainsi qu'
- un système de mesure optique pour la mesure tridimensionnelle de la surface de parties déjà construites du corps moulé,
- l'unité de commande étant conçue pour décomposer le corps moulé, sur la base des données de description géométrique, en structures partielles connues ayant chacune une entrée de paramètres de processus de consigne dans la base de données et en structures partielles inconnues sans entrée de paramètres de processus de consigne dans la base de données, pour sélectionner des paramètres de processus de consigne, pour adapter ces paramètres de processus de consigne sélectionnés sur la base des données mémorisées dans la base de données de telle sorte que, pour chacune des structures partielles inconnues, l'écart géométrique de la forme de chaque bande de matériau à déposer soit minimisé par rapport aux données de description géométrique du corps moulé et de mémoriser ces paramètres de processus de consigne adaptés pour la structure partielle inconnue dans la base de données.

12. Dispositif de fabrication selon la revendication 11, **caractérisé en ce qu'**il comprend en outre au moins un outil de coupe mobile selon au moins un axe.
